# EUROPÄISCHE PATENTSCHRIFT

(11) **EP 0 508 291 B1**
(45) Veröffentlichungstag und Bekanntmachung des Hinweises auf die Patenterteilung: **23.08.1995**
(21) Anmeldenummer: 92105592.7
(22) Anmeldetag: 01.04.1992
(51) Int. Cl.: H02B 1/18, H01H 31/12

(54) **NH-Sicherungslasttrenner in Leistenbauform**
NH-fuse breaker of the strip type
Dispositif de coupe-circuit NH-fusible du type baguette

(30) Priorität: 06.04.1991 DE 4111157
(43) Veröffentlichungstag der Anmeldung: 14.10.1992
(73) Patentinhaber: JEAN MÜLLER GmbH ELEKTROTECHNISCHE FABRIK, D-65343 Eltville (DE)
(72) Erfinder: Müller, Markus Dipl.-Ing., W-6228 Eltville/Rhein 1 (DE)
(74) Vertreter: Quermann, Helmut, Dipl.-Ing.

(56) Entgegenhaltungen:
- DE-A- 3 812 504
- DE-A- 4 028 174
- FR-A- 2 267 634

## Beschreibung

Die Erfindung betrifft einen Niederspannungs-Hochleistungs (NH)-Sicherungslasttrenner in Leistenbauform, mit einem Trennerunterteil und einem in diesem schwenkbar gelagerten Trennerdeckel, sowie im Trennerunterteil angeordneten Federkontakten für mindestens einen im Trennerdeckel gehaltenen NH-Sicherungseinsatz, wobei im Trennerdeckel ein U-förmig ausgebildetes Griffteil verschieblich gelagert ist, dessen Handgriff parallel zur Schwenkachse des Trennerdeckels angeordnet ist.

Ein derartiger NH-Sicherungslasttrenner in Leistenbauform ist aus der DE 38 12 504 A1 bekannt. Dort weist die Sicherungslastschaltleiste zur Absicherung der drei Stromphasen drei Sicherungseinsätze auf, die jeweils in separaten Trennerdeckeln gehalten sind, die mittels eines Gestänges bewegungsschlüssig miteinander verbunden sind. Mit dem mittleren Trennerdeckel wirkt das Griffteil zusammen, das in der Hauptebene des Trennerdeckels verschieblich gelagert ist. Bei in geschlossener Stellung befindlichen Deckeln und eingeschobenem Griffteil stehen die freien Enden der seitlichen Schenkeln des Griffteiles über die Lageraufnahmen des Griffteiles hinaus und erstrecken sich in den Bereich des benachbarten Deckels, so daß die Deckel nicht geöffnet werden können. In ausgezogener Stellung des Griffteiles liegen die freien Enden der seitlichen Schenkel des Griffteiles an den Lageraufnahmen an, so daß ein Öffnen der Deckel bei großem Hebelarm des Griffteiles möglich ist.

Der bekannte NH-Sicherungslasttrenner in Leistenbauform hat sich in der Praxis durchaus bewährt, insbesondere unter dem Aspekt einen dreipoligen Schaltvorgang zu gewährleisten. Nachteilig ist dort allerdings, daß das Griffteil wegen seiner ausschließlichen Verschiebbarkeit in der Hauptebene des zugeordneten Trennerdeckels immer gleich weit über diesen vorsteht. Dies bedingt eine erhöhte Bautiefe des die Sicherungslastschaltleiste bzw. die Vielzahl von nebeneinander angeordneten Sicherungslastschaltleisten üblicherweise aufnehmenden Schaltschrankes. Abgesehen hiervon kann die bekannte Sicherungslastschaltleiste nur mittels eines recht komplizierten Bewegungsablaufes geschaltet werden, da zunächst das Griffteil in der Hauptebene des zugeordneten Deckels, somit geradlinig bewegt werden muß und sich erst daran die eigentliche Schwenkbewegung zum Öffnen der Trennerdeckel anschließt bzw. dieser Vorgang beim Schließen der Trennerdeckel umgekehrt verläuft.

Aus der DE 40 28 174 A1 ist ferner ein Niederspannungs-Hochleistungs-Sicherungslasttrenner in Leistenform bekannt, mit einem Trennerunterteil und einem in diesem schwenkbar gelagerten Trennerdeckel, sowie im Trennerunterteil angeordneten Federkontakten für mindestens einen im Trennerdeckel gehaltenen NH-Sicherungseinsatz, wobei im Trennerdeckel ein U-förmig ausgebildetes Griffteil verschwenkbar gelagert ist, dessen Handgriff parallel zur Schwenkachse des Handgriffes bzw. des Trennerdeckels angeordnet ist. Das Griffteil ist aus einer Versorgungsstellung, in der es im wesentlichen parallel zum Trennerdeckel ausgerichtet ist, in eine Gebrauchsstellung verschwenkbar, bei der es im wesentlichen senkrecht zum Schaltdeckel ausgerichtet ist. Zum Verschwenken des Griffteiles zwischen den beiden Stellungen ist es erforderlich, dieses zum Entarretieren geringfügig in der Deckelebene bzw. senkrecht zur Deckelebene zu bewegen. Entsprechend sind die Öffnungen im Trennerdeckel zur Aufnahme der beiden Zapfen des Griffteiles als Winkelausnehmungen ausgebildet. Bei dem bekannten NH-Sicherungslasttrenner dienen damit die geradlinigen Bewegungen des Griffteiles ausschließlich dem Entarretieren und stellen eine Hilfsbewegung des Griffteiles dar, die eigentliche Hauptbewegung zum Überführen des Griffteiles von der Versorgungsstellung in die Gebrauchsstellung ist eine Schwenkbewegung. Dadurch, daß beim Betätigen des Sicherungslasttrenners Haupt- und Hilfsbewegungen mit dem Griffteil auszuführen sind, gestaltet sich die Betätigung des Trennerdeckels schwierig, abgesehen von der aufwendigen Bauweise.

Aufgabe der Erfindung ist es, einen NH-Sicherungslasttrenner der genannten Art zu schaffen, der einerseits im Griffbereich wenig Bauraum benötigt, andererseits einfach und schnell zu bedienen ist.

Gelöst wird die Aufgabe durch einen NH-Sicherungslasttrenner der genannten Art, bei dem das Griffteil im Bereich seiner dem Handgriff zwischen sich aufnehmenden seitlichen Schenkel in im wesentlichen senkrecht zur Hauptebene des Deckels gerichteten seitlichen Deckelführungen verschieblich gelagert ist, sowie Mittel vorgesehen sind, die das ausgezogene Griffteil in Auszugs- und Einschubrichtung festlegen.

Wesentlich ist bei dem erfindungsgemäßen Sicherungslasttrenner zunächst, daß das Griffteil im wesentlichen senkrecht zur Hauptebene des Deckels verschieblich gelagert ist. Ausgehend von der eingeschobenen Position, bei der der Handgriff zweckmäßig relativ nahe am Trennerdeckel positioniert ist, so daß er gerade noch von Hand ergriffen werden kann, erfolgt das Ausziehen des Griffteiles, das in der ausgezogenen Position festgelegt wird. Dies führt dazu, daß beim weiteren Aufbringen einer Ausziehbewegung auf das Griffteil dieses den Trennerdeckel und damit den von diesem gehaltenen NH-Sicherungseinsatz mitnimmt, so daß der Schaltvorgang im Sinne einer Trennung der zugeordneten Phase ausgelöst wird. Dieser Bewegungsablauf ermöglicht somit eine einfache und schnelle Bedienbarkeit des Sicherungslasttrenners aufgrund der vom Ausziehen des Griffteiles in das Öffnen des Trennerdeckels unmittelbar übergehenden Bewegung, was insbesondere der Bedienbarkeit im Notfall zugute kommt. Andererseits stellen die Mittel zum Festlegen des ausgezogenen Griffteiles in Einschubrichtung sicher, daß der Trennerdeckel mit dem Sicherungseinsatz wieder geschlossen werden kann, um den Schaltvorgang im Sinne des Schließens der Phase durchzuführen. Nach dem Lösen der Mittel zum Festlegen des ausgezogenen Griffteiles in Einschubrichtung kann das Griffteil eingeschoben werden. Der in unmittelbarer Nähe zum Trennerdeckel angeordnete Handgriff steht nur geringfügig über den Trennerdeckel über, so daß ein den Sicherungslasttrenner umgebender Schaltschrank nur eine geringe Bautiefe benötigt.

Der erfindungsgemäße Sicherungslasttrenner in Leistenbauform eignet sich insbesondere für eine Anordnung in unmittelbarer Nähe zu entsprechend gestalteten weiteren Sicherungslasttrennern. Da bei demjenigen Sicherungslasttrenner, an dem nicht gearbeitet werden muß, das Griffteil eingeschoben ist und somit nicht über den Trennerdeckel übersteht, können Arbeiten an dem diesembenachbarten Sicherungslasttrenner ungehindert vonstatten gehen. Trotz der schmalen Leistenbauweise der Sicherungslasttrenner, deren Breite in aller Regel geringer ist als die Hand des Bedienenden, erfolgt keine Behinderung durch überstehende Bauteile der benachbarten Sicherungslasttrenner.

Die Erfindung läßt sich auf unterschiedlich gestaltete Sicherungslasttrenner in Leistenbauform anwenden: So kann der Sicherungslastrenner mehrere Trennerdeckel aufweisen, wobei jedem Trennerdeckel ein eigener Sicherungseinsatz und ein eigenes Griffteil zugeordnet ist. Andererseits kann das Griffteil auch nur einem Trennerdeckel zugeordnet sein und eine bewegungsschlüssige Verknüpfung mit den anderen Trennerdeckeln des Sicherungslasttrenners erfolgen. Weiterhin besteht die Möglichkeit, daß ein mit dem Griffteil ausgestatteter Trennerdeckel mehrere Sicherungseinsätze aufnimmt.

In einer zweckmäßigen Ausgestaltung der Erfindung sind die seitlichen Schenkel des Griffteiles und/oder der diese verbindende Handgriff plattenförmig ausgebildet, womit das Griffteil den Trennerdeckel flach umschließt. Zur einfachen Führung des Griffteiles im Trennerdeckel sollte die dem jeweiligen plattenförmigen Schenkel zugeordnete seitliche Deckelführung zwei Führungsansätze bzw. eine Führungsausnehmung aufweisen, zwischen denen bzw. in der der plattenförmige Schenkel geführt ist.

Gemäß einer weiteren Ausgestaltung der Erfindung ist vorgesehen, daß die Mittel, die das ausgezogene Griffteil in Auszugsrichtung festlegen, als Ansätze ausgebildet sind, wobei die seitlichen Schenkel im Bereich ihrer freien Schenkelenden die aufeinander zu gerichteten Ansätze aufweisen und der jeweilige Ansatz die zugeordnete seitliche Deckelführung hintergreift. In eingeschobener Stellung des Griffteiles stehen damit die seitlichen Schenkel mit ihrem freien Ende auf der dem Handgriff abgewandten Seite des Trennerdeckels über diesen über, so daß ein Abstand zwischen den Ansätzen und dem Trennerdeckel verbleibt. Dieser Abstand entspricht dem Auszugsweg des Griffteiles; in ausgezogener Stellung des Griffteiles liegen die Ansätze am Trennerdeckel an.

Gemäß einer weiteren bevorzugten Ausgestaltung der Erfindung ist vorgesehen, daß die Mittel, die das ausgezogene Griffteil in Einschubrichtung festlegen, als in den seitlichen Schenkeln des Griffteiles gelagerte vorgespannte Sperrklinken ausgebildet sind, wobei die jeweilige Sperrklinge bei ausgezogenem Griffteil relativ entspannt an einem in Einschubrichtung vorlaufenden, deckelseitigen Ansatz anliegt. Die druckfeste Verbindung des ausgezogenen Griffteiles mit dem Deckel gestattet es, den Deckel mit dem Sicherungseinsatz zu schließen und damit den Schaltvorgang auszuführen. Um das Griffteil einschieben zu können, ist es nur erforderlich, die Sperrklinken in deren relativ gespannte Position zu überführen, womit sie außer Eingriff mit den zugeordneten Ansätzen gelangen. In ihrer eingeschobenen Position sind die Sperrklinken je nach der geometrischen Ausbildung der Ansätze relativ ge- oder entspannt. Sofern die Vorspannung auf die Sperrklinken durch ein Kunststoffbauteil aufgebracht wird, ist es vorteilhaft, wenn dieses bei eingeschobenem Griffteil eine entspannte Lage einnimmt.

Eine spezifische Ausgestaltung der Mittel, die das ausgezogene Griffteil in Einschubrichtung festlegen, sieht vor, daß der deckelseitige Ansatz eine Führungsfläche für eine korrespondierende Führungsfläche der Sperrklinke bei deren Einschieben bzw. Ausziehen aufweist, wobei die Führungsfläche des deckelseitigen Ansatzes und die Führungsfläche der relativ entspannten Sperrklinge unter einem spitzen Winkel zur Einschiebrichtung vom seitlichen Schenkel des Griffteils weg verlaufen. Die Führungsflächen stellen sicher, daß die Ansätze und die Sperrklinken beim Einschieben bzw. Ausziehen des Griffteiles über Teilstrecken definiert aufeinandergleiten und dabei die Sperrklinken stetig zwischen deren sperrenden und nicht sperrenden Position bzw. umgekehrt bewegen.

Eine besonders vorteilhafte Weiterbildung sieht vor, daß die Sperrklinken Bestandteil eines in den seitlichen Schenkeln des Griffteiles schwenkbar gelagerten U-förmigen Betätigungsgliedes sind, wobei die freien Schenkelenden des Betätigungsgliedes die Sperrklinge darstellen und die jeweilige Sperrklinge mit einem Federeigenschaft aufweisenden Ansatz versehen ist, der sich am zugeordneten seitlichen Schenkel des Griffteiles abstützt. Durch eine Schwenkbewegung des Betätigungsgliedes relativ zum Griffteil können die Sperrklinken gegen die Kraft der Federeigenschaft aufweisenden Ansätze in die nicht sperrende Position überführt werden, so daß ein Einschieben des Griffteiles möglich ist. Beim Ausziehen des Griffteiles hingegen, gleiten die Sperrklinken auf den Schrägen, mit der Folge, daß die Sperrklinken gegen die Kraft der Feder in das Griffteil eingeschwenkt werden. Das Betätigungsglied ist zweckmäßig der Form des Griffteiles angepaßt, das heißt es sollte entsprechend der plattenförmigen Erstreckung des Griffteiles plattenförmig ausgebildet sein.

Als bevorzugtes Material für die nicht leitenden Bauteile des Sicherungslasttrenners wird Kunststoff angesehen, diese Bauteile sind insbesondere als Kunststoffspritzteile ausgebildet. Legt man die zuvor beschriebenen Weiterbildungen der Erfindung zugrunde, wird das einteilige Betätigungsglied mit dem einteiligen Griffteil schwenkbar verbunden und dann das Griffteil im Bereich der aufeinander zu gerichteten Ansätze geringfügig auseinandergespreizt seitlich über den Trennerdeckel geschoben. Die seitlichen Schenkel des Griffteiles sind dabei in den seitlichen Deckelführungen gelagert und es hintergreifen die mit den freien Schenkelenden des Griffteiles verbundenen Ansätze den Trennerdeckel. Durch Betätigen des Betätigungsgliedes entgegen der Kraft der Federeigenschaft aufweisenden Ansätze werden die Sperrklinken eingefahren, so daß das Griffteil in die eingeschobene Stellung überführt werden kann. Es können dabei zwischen dem Griffteil und dem Gehäusedeckel zusätzliche Anschläge vorgesehen sein, die den Einschubweg des Griffteiles begrenzen, so daß ein definierter Abstand des Handgriffes zur Hauptebene des Trennerdeckels in eingeschobener Position des Griffteiles gewährleistet ist.

In den Figuren ist die Erfindung an einer Ausführungsform dargestellt, ohne auf diese beschränkt zu sein. Es stellt dar:
- Figur 1: eine räumliche Ansicht des erfindungsgemäßen NH-Sicherungslasttrenners in Leistenbauform, verdeutlicht mit zwei geschlossenen Trennerdeckeln sowie einem geöffneten Trennerdeckel,
- Figur 2: eine räumliche Ansicht von Trennerdeckel, Griffteil und Betätigungsglied, verdeutlicht bei ausgezogenem Griffteil,
- Figur 3: eine Darstellung gemäß Figur 2, verdeutlicht bei eingeschobenem Griffteil,

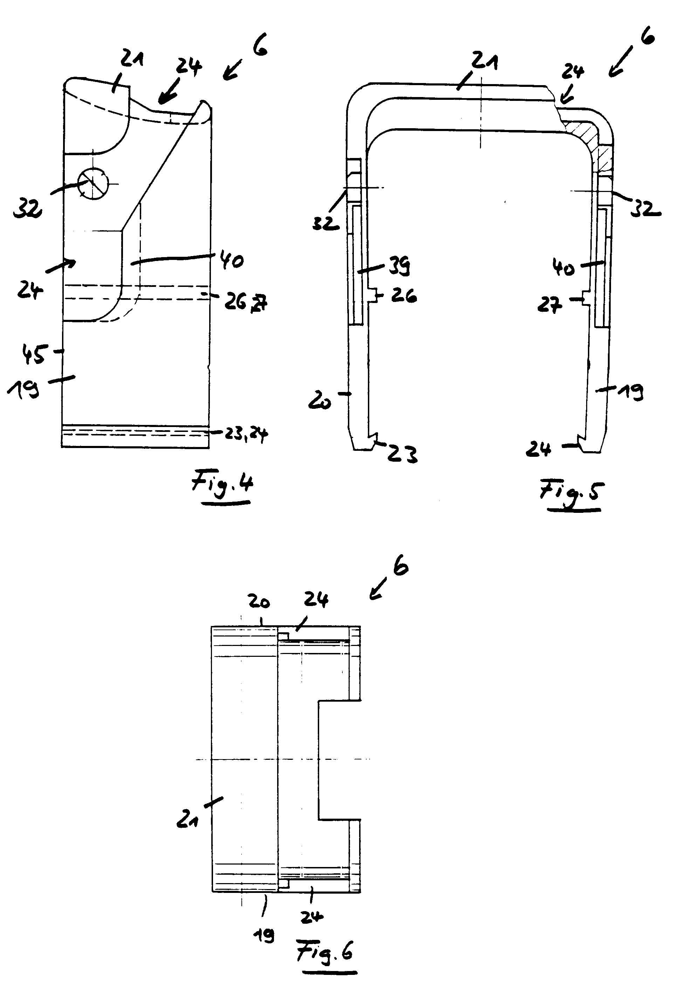

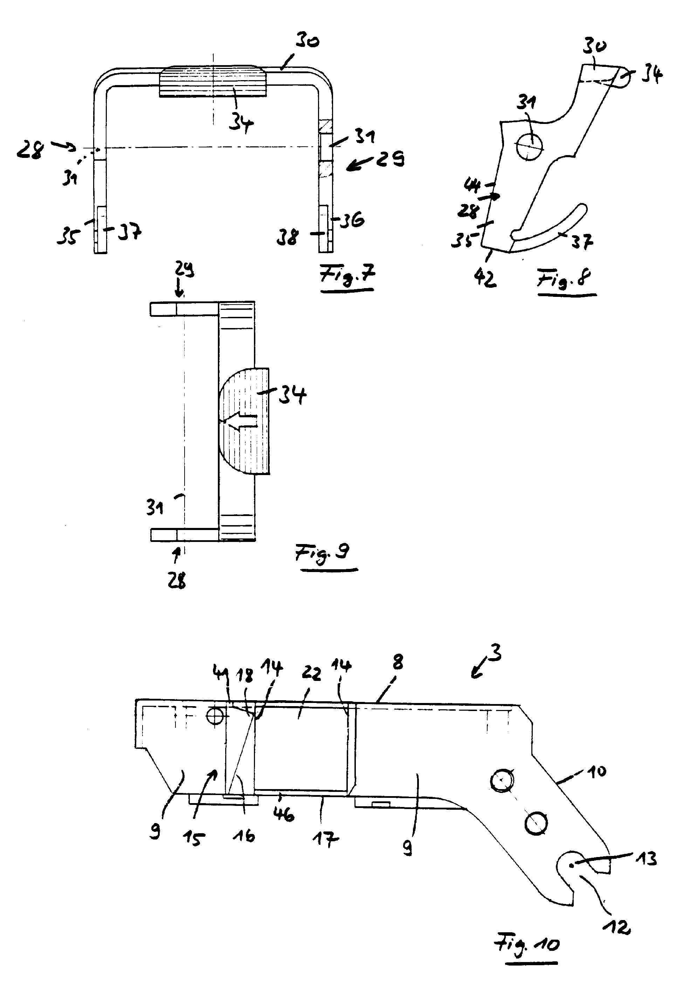

- Figuren 4, 5 und 6: das Griffteil in einer Seitenansicht, Frontansicht und Draufsicht,
- Figuren 7, 8 und 9: das Betätigungsglied in einer Frontansicht, Seitenansicht und Draufsicht, und
- Figur 10: eine Seitenansicht des Trennerdeckels.

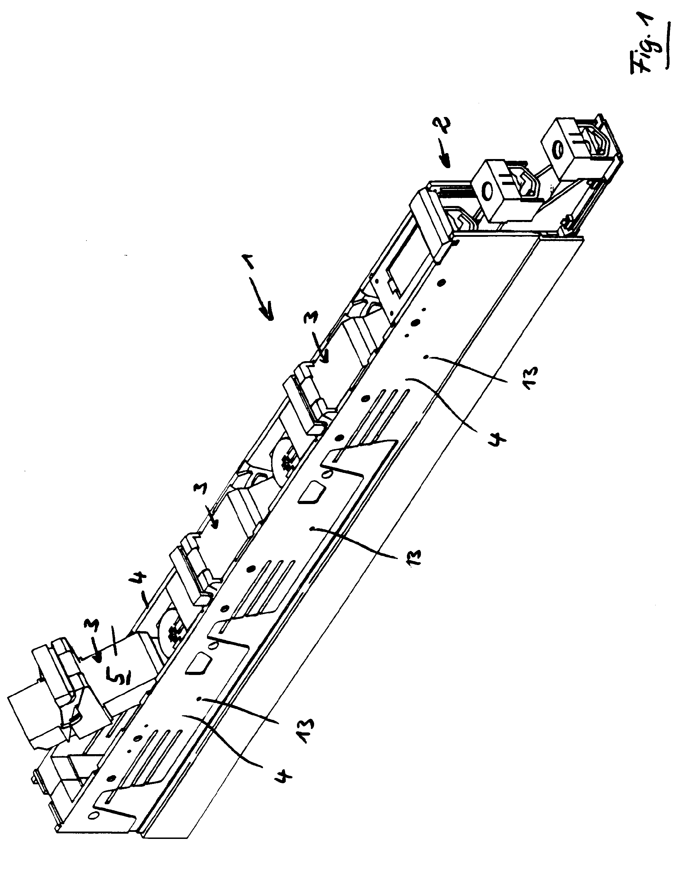

Der in Figur 1 gezeigte NH-Sicherungslasttrenner 1 ist in Leistenform gebildet und weist einen Trennerunterteil 2 und drei in diesem schwenkbar gelagerte Trennerdeckel 3 auf. Nicht gezeigt ist der im jeweiligen Trennerdeckel 3 gehaltene NH-Sicherungseinsatz und die diesem zugeordneten Federkontakte im Trennerunterteil mit den dazugehörigen Stromzuführungen, ferner die Befestigung des Trennerunterteiles 2 in einem Schaltkasten auf Stromschienen. Der Strom wird im Trennerunterteil 2 über drei Stromzuführungen zugeführt, die mit den Federkontakten verbunden sind, weitere Federkontakte sind mit drei Stromabgängen verbunden. Neben dem gezeigten Sicherungslasttrenner können mehrere entsprechend in Leistenbauform gestaltete Sicherungslasttrenner angeordnet sein, die unmittelbar aneinander grenzen. Zwei Seitenwände 4 des Trennerunterteiles 2 begrenzen zwischen sich einen Raum, der von den eingeschwenkten Trennerdeckeln 3 und die diesem zugeordneten Sicherungseinsätzen durchsetzt wird. Bei jeweils eingeschwenktem Trennerdeckel 3 bildet dessen Hauptebene 5 eine Ebene mit der Oberfläche des Trennerunterteiles 2.

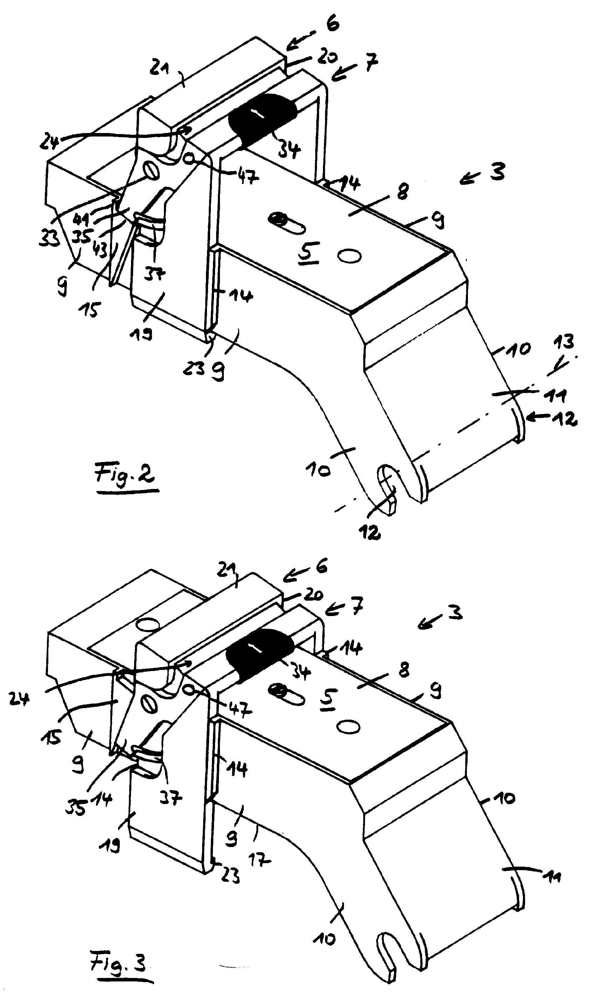

Die Figuren 2 und 3 verdeutlichen Einzelheiten des jeweiligen Trennerdeckels 3, auf den ein Griffteil 6 aufgesteckt ist, das seinerseits ein Betätigungsglied 7 schwenkbar aufnimmt. Im Detail besteht der Trennerdeckel 3 aus einem in der Hauptebene 5 verlaufenden Boden 8, senkrecht hierzu angeordneten und parallel zueinander positionierten Seitenwänden 9, die sich unter einem stumpfen Winkel in Lagerwangen 10 für den Trennerdeckel 3 fortsetzen, zwischen denen Versteifungsabschnitte 11 angeordnet sind. Das jeweilige freie Ende der Lagerwangen 10 weist eine U-förmige Ausnehmung 12 auf, die es ermöglicht, den Trennerdeckel 3 auf eine nicht näher gezeigte Lagerachse des Trennerunterteiles 2 aufzustecken, womit sich die Schwenkachse 13 für den Trennerdeckel 3 ergibt.

Die Figuren 2 und 3 sowie 10 zeigen an der Außenseite der jeweiligen Seitenwand 9 des Trennerdeckels 3 angeordnete Führungsleisten 14 für das Griffteil 6. Pro Seite sind zwei parallel beabstandet zueinander angeordnete Führungsleisten 14 vorgesehen, die sich senkrecht zur Hauptebene 5 des Trennerdeckels 3 erstrecken. Im Bereich des der Ausnehmung 12 abgewandten Endes der jeweiligen Seitenwand 9 ist außen an dieser, über die zugewandte Führungsleiste 14 überstehend, ein keilförmiger Ansatz 15 vorgesehen, dessen den Führungsleisten 14 zugewandte Schräge 16 sich vom Boden 8 zur freien Kante 17 der Seitenwand 9 hin verjüngt. Der maximal erweiterte Bereich des keilförmigen Ansatzes 15 endet geringfügig unterhalb des Bodens 8 in einem rechteckigen spitzen Bereich 18, der seinerseits geringfügig beabstandet zur nächstliegenden Führungsleiste 14 ist.

Die Figuren 2, 3 und insbesondere 4 bis 6 verdeutlichen die Ausbildung des Griffteiles 6. Dieses weist zwei parallel zueinander angeordnete seitliche Schenkel 19 und 20 auf, die ein Handgriff 21 verbindet, derart, daß sich das Griffteil 6 U-förmig darstellt. Die Schenkel 19 und 20 sowie der Handgriff 21 sind plattenförmig ausgebildet, wobei sich deren Hauptebenen senkrecht zum U erstrecken. Der Abstand der beiden Schenkel 19 und 20 entspricht den Außenabmessungen des Trennerdeckels 3 im Bereich der zwischen den jeweiligen Führungsleisten 14 gebildeten seitlichen Deckelführung 22. Die Breitenabmessung der Schenkel 19 bzw. 20 ist auf den Abstand der dem jeweiligen Schenkel zugeordneten Führungsleisten 14 abgestimmt, derart, daß die Schenkel 19 bzw. 20 zwischen den Führungsleisten 14 der jeweiligen Seitenwand 9 geführt sind. Die Höhe der Führungsleisten 14 ist so bemessen, daß sie mit der Außenfläche des zugeordneten Schenkels 19 bzw. 20 fluchtet. Die seitlichen Schenkel 19 und 20 weisen im Bereich ihrer freien Schenkelenden aufeinander zu gerichtete Ansätze 23 und 24 auf.

Wie insbesondere der Darstellung der Figuren 2 und 3 zu entnehmen ist, weist das Griffteil 6 außen eine sich vom Schenkel 19 über den Handgriff 21 zum Schenkel 20 erstreckende Ausnehmung 25 für das Betätigungsglied 7 auf. Die U-förmige Ausnehmung 25 erstreckt sich konkret in der oberen Hälfte der Schenkel 19 und 20, von ihren den Ansätzen 15 zugewandten Seite ausgehend in den dieser abgewandten Bereich des Griffteiles 6 und von dort gerade durch den Handgriff 21. Auf etwa halber Höhe zwischen dem Handgriff 21 und den Ansätzen 23 bzw. 24 sind weitere aufeinander zu gerichtete Ansätze 26 und 27 mit den Schenkeln 19 und 20 verbunden.

Die Figuren 2 und 3 sowie insbesondere 7 bis 9 verdeutlichen die Ausbildung des Betätigungsgliedes 7. Dieses ist U-förmig ausgebildet, wobei die plattenförmigen Schenkel 28 und 29 ein plattenförmiges Betätigungsmittelteil 30 verbindet. Die Plattenstärke des Betätigungsgliedes 7 ist geringfügig geringer als die Tiefe der U-förmigen Ausnehmung 25 und der lichte Abstand der beiden Schenkel 28 und 29 geringfügig größer als die Außenabmessung des Griffteiles 6 im Bereich der Ausnehmung 25. Aufgrund dieser geometrischen Verhältnisse ist das Betätigungsglied 7 in die Ausnehmung 25 des Griffteiles 6 einsetzbar. Die Schenkel 28 und 29 des Betätigungsgliedes 7 sind mit Bohrungen 31 versehen und die Schenkel 19 und 20 des Griffteiles 6 mit entsprechenden Bohrungen 32, eine Schraubachse 33 durchsetzt die Bohrungen 31 und 32, so daß das in die Ausnehmung 25 des Griffteiles 6 eingesetzte Betätigungsglied 7 relativ zum Griffteil 6 schwenkbar ist. Eine im Mittelbereich des Betätigungsmittelteiles 30 angeordnete Betätigungsnase 34 ist mit einem Hinweissymbol versehen, um zu verdeutlichen, daß zur sachgerechten Betätigung des Griffteiles 6 das Betätigungsglied 7 in diesem Bereich in Richtung des Griffteiles 6 zu drücken ist.

Wie insbesondere der Darstellung der Figuren 2 und 3 zu entnehmen ist, wirken die freien Enden der Schenkel 28 und 29 des Betätigungsgliedes 7 als Sperrklinken 35 und 36. Jede dieser Sperrklinken 35 bzw. 36 ist mit einem Federeigenschaft aufweisenden blattförmigen Ansatz 37 bzw. 38 versehen, der sich vom unteren Ende der Sperrklinge 35 bzw. 36 in einem nach innen gewölbten Bogen erstreckt und mit seinem freien Ende im Grund einer inneren Ausnehmung 39 bzw. 40 des Griffteiles 6 im Bereich dessen Schenkel 19 bzw. 20 anliegt.

Der insoweit beschriebene Trennerdeckel 3, das Griffteil 6 und das Betätigungsglied 7 mit Sperrklinken 35 und 36 sind als Kunststoffspritzteile ausgebildet. Die Montage der Baugruppe erfolgt, indem zunächst das Betätigungsglied 7 in die Ausnehmung 25 des Griffteiles 6 eingesteckt und die beiden Teile mittels der Schraubachse 33 schwenkbar verbunden werden, wobei zwischen ihnen die aus den Ansätzen 37 und 38 herrührende Federkraft wirkt, die das Bestreben hat, die Sperrklinken 35 und 36 aus dem Griffteil 6 herauszubewegen. Die soweit montierte Einheit wird zwischen den Führungen 14 auf den Trennerdeckel 3 aufgesteckt bis die auseinandergespreizten Ansätze 23 und 24 die freien Kanten 17 der Seitenwände 9 hintergreifen. Diese Position ist in Figur 2 dargestellt, der ferner zu entnehmen ist, daß die Sperrklinge 35 und damit auch die dort nicht ersichtliche Sperrklinge 36 bei relativ entspanntem Ansatz 37 bzw. 38 gegen äußere, vorlaufende Nasen 41 der keilförmigen Ansätze 15 bewegt sind und sich ferner die vorlaufenden ebenen Flächen 42 an der dem spitzen Bereich 18 des Ansatzes 15 angrenzenden Schräge 43 anliegen. In dieser Stellung ist das Griffteil 6 über die Ansätze 23 und 24 sowie die Abstützung des Betätigungsgliedes 7 an den keilförmigen Ansätzen 15 zug- und druckfest verriegelt.

Zum Einschieben des Griffteiles 6 wird das Betätigungsmittelteil 30 des Betätigungsgliedes 7 in Richtung des Pfeilsymboles auf den Handgriff 21 des Griffteiles 6 zu bewegt, womit die Sperrklinken 35 und 36 des Betätigungsgliedes 7 außer Eingriff mit den keilförmigen Ansätzen 15 gelangen und die den Ansätzen 37 und 38 abgewandte Kante des jeweiligen Schenkels 28 bzw. 29 in eine Flucht mit der zugeordneten geführten Kante der Schenkel 19 und 20 des Griffteiles 6 gelangt. Nunmehr besteht die Möglichkeit, die Sperrklinken 35 und 36 beim Einschieben des Griffteiles 6 an den keilförmigen Ansätzen 15 vorbeizubewegen. Begrenzt wird die Einschubbewegung durch die aufeinander zu gerichteten Ansätze 26 und 27 des Griffteiles 6, die mit zwischen den Führungsleisten 14 angeordneten Stegen 46 des Trennerdeckels 3 zusammenwirken. Beim Einschieben des Griffteiles folgen die unter Federspannung stehenden Sperrklinken 35 und 36 der Kontur der keilförmigen Ansätze 15 im Bereich deren Schräge 16. Diese ist dabei so auf die Geometrie und den Lagerpunkt des Betätigungsgliedes 7 abgestimmt, daß bei eingeschobener Stellung des Griffteiles das Betätigungsglied 7 im Bereich der Kanten 44 der Sperrklinken 35 und 36 voll an den Schrägen 16 der keilförmigen Ansätze 15 anliegt. In den Figuren 2 und 3 ist zusätzlich eine Öffnung 47 im Betätigungsglied 7 gezeigt, die mit einer nicht sichtbaren Öffnung im Griffteil 6 korrespondiert und die Möglichkeit bietet, den Trennerdeckel 3 sowohl bei eingeschobenem als auch ausgezogenem Griffteil 6 mittels eines Vorhängeschlosses gegen Manipulation des Griffteiles 6 zu sichern. Ausgehend von der in Figur 3 gezeigten eingeschobenen Position kann bei nicht abgeschlossenem Griffteil 6 der Trennerdeckel 3 innerhalb kürzester Zeit geöffnet werden. Hierzu ist es nur erforderlich, den Handgriff 21 zu unterfassen und herauszuziehen, sobald die Ansätze 23 und 24 in Anlage mit den freien Kanten 17 des Trennerdeckels 3 gelangen, kann eine Öffnungskraft über das Griffteil 6 auf den Trennerdeckel 3 übertragen werden mit der unmittelbaren Folge des Schaltvorganges.

Figur 1 zeigt schließlich, daß sich der jeweilige Trennerdeckel 3 vollständig in das Trennerunterteil 2 einschwenken läßt. Konstruktiv ist dabei zwischen dem Trennerdeckel 3 und der Seitenwand 4 des Trennerunterteils ein solcher Spalt vorgesehen, daß genügend Raum zur Aufnahme des den Trennerdeckel 3 umschließenden Griffteiles mit dem Betätigungsglied 7 verbleibt.

## Patentansprüche

1. Niederspannungs-Hochleistungs (NH)-Sicherungslasttrenner in Leistenbauform, mit einem Trennerunterteil (2) und einem in diesem schwenkbar gelagerten Trennerdeckel (3), sowie im Trennerunterteil (2) angeordneten Federkontakten für mindestens einen im Trennerdeckel (3) gehaltenen NH-Sicherungseinsatz, wobei im Trennerdeckel (3) ein U-förmig ausgebildetes Griffteil (6) verschieblich gelagert ist, dessen Handgriff (21) parallel zur Schwenkachse des Trennerdeckels (3) angeordnet ist, **dadurch gekennzeichnet**, daß das Griffteil (6) im Bereich seiner den Handgriff (21) zwischen sich aufnehmenden seitlichen Schenkel (19, 20) in im wesentlichen senkrecht zur Hauptebene (5) des Deckels (3) gerichteten seitlichen Deckelführungen (22) verschieblich gelagert ist, sowie Mittel (23, 24; 15, 35, 36) vorgesehen sind, die das ausgezogene Griffteil (6) in Auszugs- und Einschubrichtung festlegen.

2. Sicherungslasttrenner nach Anspruch 1, **dadurch gekennzeichnet**, daß die seitlichen Schenkel (19, 20) und/oder der diese verbindende Handgriff (21) plattenförmig ausgebildet sind.

3. Sicherungslasttrenner nach Anspruch 2, **dadurch gekennzeichnet**, daß die dem jeweiligen plattenförmigen Schenkel (19, 20) zugeordnete seitliche Deckelführung (22) zwei Führungsansätze (14) bzw. eine Führungsausnehmung aufweist, zwischen denen bzw. in der der plattenförmige Schenkel (19, 20) geführt ist.

4. Sicherungslasttrenner nach einem der Ansprüche 1 bis 3, **dadurch gekennzeichnet**, daß die Mittel (23, 24), die das ausgezogene Griffteil (6) in Auszugrichtung festlegen, als Ansätze (23, 24) ausgebildet sind, wobei die seitlichen Schenkel (19, 20) im Bereich ihrer freien Schenkelenden die aufeinander zu gerichteten Ansätze (23, 24) aufweisen und der jeweilige Ansatz (23, 24) die zugeordnete seitliche Deckelführung (22) hintergreift.

5. Sicherungslastrenner nach einem der Ansprüche 1 bis 4, **dadurch gekennzeichnet**, daß die Mittel (15, 35, 36), die das ausgezogene Griffteil (6) in Einschubrichtung festlegen, als in den seitlichen Schenkeln (19, 20) des Griffteiles (6) gelagerte vorgespannte Sperrklinken (35, 36) ausgebildet sind, wobei die jeweilige Sperrklinke (35, 36) bei ausgezogenem Griffteil (6) relativ entspannt an einem in Einschubrichtung vorlaufenden, deckelseitigen Ansatz (15) anliegt.

6. Sicherungslasttrenner nach Anspruch 5, **dadurch gekennzeichnet**, daß der deckelseitige Ansatz (15) eine Führungsfläche (16) für eine korrespondierende Führungsfläche (44) der Sperrklinke (35, 36) bei deren Einschieben bzw. Ausziehen aufweist, wobei die Führungsfläche (16) des deckelseitigen Ansatzes (15) und die Führungsfläche (44) der relativ entspannten Sperrklinke (35, 36) unter einem spitzen Winkel zur Einschiebrichtung vom seitlichen Schenkel (19, 20) des Griffteils (6) weg verlaufen.

7. Sicherungslasttrenner nach Anspruch 5 oder 6, **dadurch gekennzeichnet**, daß die Sperrklinken (35, 36) Bestandteil eines in den seitlichen Schenkeln (19, 20) des Griffteiles (6) schwenkbar gelagerten, U-förmigen Betätigungsgliedes (7) sind, wobei die freien Schenkelenden des Betätigungsgliedes (7) die Sperrklinken (35, 36) darstellen.

8. Sicherungslasttrenner nach einem der Ansprüche 5 bis 7, **dadurch gekennzeichnet**, daß die jeweilige Sperrklinke (35, 36) mit einem Federeigenschaft aufweisenden Ansatz (37, 38) versehen ist, der sich am zugeordneten seitlichen Schenkel (19, 20) des Griffteils (6) abstützt.

9. Sicherungslasttrenner nach einem der Ansprüche 5 bis 8, **dadurch gekennzeichnet**, daß das Betätigungsglied (7) entsprechend der plattenförmigen Erstreckung des Griffteiles (6) plattenförmig ausgebildet ist.

10. Sicherungslasttrenner nach einem der Ansprüche 1 bis 9, **dadurch gekennzeichnet**, daß das Griffteil (6) und/oder das Betätigungsglied (7) aus Kunststoff bestehen.

11. Sicherungslastträger nach einem der Ansprüche 1 bis 10, **dadurch gekennzeichnet**, daß der Trennerdeckel (3) mit den seitlichen Schenkeln (19, 20) des Griffteils (6) zwischen Seitenwangen (4) des Trennerunterteils (2) einschwenkbar ist.

12. Sicherungslasttrenner nach einem der Ansprüche 1 bis 11, **dadurch gekennzeichnet**, daß er der Aufnahme von drei Sicherungseinsätzen dient, wobei jedem Sicherungseinsatz ein Trennerdeckel (3) zugeordnet ist, der ein Griffteil (6) aufweist.

## Claims

1. Low-voltage high-breaking-capacity (l.v. h.b.c.) fuse switch-disconnector of strip-type design, having a lower disconnector part (2) and, mounted so that it can pivot in the latter, a disconnector cover (3) as well as, arranged in the lower disconnector part (2), spring contacts for at least one l.v. h.b.c. fuse unit held in the disconnector cover (3), a handle part (6), designed in a U-shape, being mounted so that it can be moved in the disconnector cover (3), the grip (21) of which handle part (6) is arranged parallel to the pivot axis of the disconnector cover (3), characterized in that the handle part (6), in the region of its lateral limbs (19, 20) which receive the grip (21) between them, is mounted so that it can be moved in lateral cover guides (22) oriented essentially perpendicularly to the main plane (5) of the cover (3), and means (23, 24; 15, 35,- 36) which fix the extracted handle part (6) in the extraction and insertion direction are provided.

2. Fuse switch-disconnector according to Claim 1, characterized in that the lateral limbs (19, 20) and/or the grip (21) connecting the latter are designed flat.

3. Fuse switch-disconnector according to Claim 2, characterized in that the lateral cover guide (22) assigned to the respective flat limb (19, 20) has two guide projections (14) or one guide recess, between or in which, respectively, the flat limb (19, 20) is guided.

4. Fuse switch-disconnector according to one of Claims 1 to 3, characterized in that the means (23, 24) which fix the extracted handle part (6) in the extraction direction are designed as projections (23, 24), the lateral limbs (19, 20) having, in the region of their free limb ends, the projections (23, 24) which point towards one another and the respective projection (23, 24) engaging behind the associated lateral cover guide (22).

5. Fuse switch-disconnector according to one of Claims 1 to 4, characterized in that the means (15, 35, 36) which fix the extracted handle part (6) in the insertion direction are designed as prestressed retaining pawls (35, 36) mounted in the lateral limbs (19, 20) of the handle part (6), the respective retaining pawl (35, 36) resting with relatively little stress on a cover-side projection (15) extending in the insertion direction, when the handle part (6) is extracted.

6. Fuse switch-disconnector according to Claim 5, characterized in that the cover-side projection (15) has a guide surface (16) for a corresponding guide surface (44) of the retaining pawl (35, 36) when the latter is inserted or extracted, the guide surface (16) of the cover-side projection (15) and the guide surface (44) of the relatively unstressed retaining pawl (35, 36) moving away at an acute angle with respect to the insertion direction from the lateral limb (19, 20) of the handle part (6).

7. Fuse switch-disconnector according to Claim 5 or 6, characterized in that the retaining pawls (35, 36) form part of a U-shaped actuation element (7) which is mounted so that it can pivot in the lateral limbs (19, 20) of the handle part (6), the free limb ends of the actuation element (7) constituting the retaining pawls (35, 36).

8. Fuse switch-disconnector according to one of Claims 5 to 7, characterized in that the respective retaining pawl (35, 36) is provided with a projection (37, 38) having a spring-elastic property, which is supported on the associated lateral limb (19, 20) of the handle part (6).

9. Fuse switch-disconnector according to one of Claims 5 to 8, characterized in that the actuation element (7) is designed flat, corresponding to the flat extent of the handle part (6).

10. Fuse switch-disconnector according to one of Claims 1 to 9, characterized in that the handle part (6) and/or the actuation element (7) consist of plastic.

11. Fuse switch-disconnector according to one of Claims 1 to 10, characterized in that the disconnector cover (3) can be pivoted in, using the lateral limbs (19, 20) of the handle part (6), between lateral cheeks (4) of the lower disconnector part (2).

12. Fuse switch-disconnector according to one of Claims 1 to 11, characterized in that it is used for holding three fuse units, one disconnector cover (3) which has a handle part (6) being assigned to each fuse unit.

## Revendications

1. Coupe-circuit basse tension/haut pouvoir de coupure de type baguette, comprenant une partie inférieure (2) recevant, de manière pivotante, un couvercle (13) ainsi que des contacts fixes solidaires de la partie inférieure (2) pour au moins un élément fusible basse tension de puissance maintenu dans un couvercle (3) ayant une partie de poignée (6) en forme de U, logée coulissante, dont la poignée (21) est parallèle à l'axe de pivotement du couvercle (3), caractérisé en ce que la poignée (6) est logée coulissante dans des guides latéraux de couvercle (20) dirigés essentiellement perpendiculairement au plan principal (5) du couvercle (3), au niveau des branches (19, 20) latérales recevant entre elles la poignée (21) ainsi que des moyens (23, 24 ; 15, 35, 36) qui fixent la poignée (6) extraite dans la direction d'extraction ou d'introduction.

2. Coupe-circuit selon la revendication 1, caractérisé en ce que les branches latérales (19, 20) et/ou la poignée (21), qui les relie, sont en forme de plaques.

3. Coupe-circuit selon la revendication 2, caractérisé en ce que le guide de couvercle (22), latéral associé aux branches (19, 20) respectives en forme de plaque, comporte deux prolongements de guidage (14) ou cavités de guidage entre ou dans lesquels se guident les branches en forme de plaque (19, 20).

4. Coupe-circuit selon l'une des revendications 1 à 3, caractérisé en ce que les moyens (23, 24) qui fixent la poignée (6), extraite, dans la direction d'extraction, sont des prolongements (23, 24), les branches latérales (19, 20) étant munies, au niveau de leur extrémité libre, de prolongements (23, 24) dirigés l'un vers l'autre et chaque prolongement (23, 24) vient prendre derrière le guidage de couvercle (22) latéral correspondant.

5. Coupe-circuit selon l'une des revendications 1 à 4, caractérisé en ce que les moyens (15, 35, 36) qui fixent la poignée extraite (6) en position d'engagement, sont réalisés sous la forme de verrous d'accrochage (35, 36) montés précontraints dans les branches latérales (19, 20) de la poignée (6), les verrous respectifs (35, 36) étant détendus de manière relative lorsque la poignée (6) est extraite, en s'appuyant contre un prolongement (15) au niveau du couvercle, en amont, dans la direction d'engagement.

6. Coupe-circuit selon la revendication 5, caractérisé en ce que le prolongement (15) du côté du couvercle présente une surface de guidage (16) pour une surface de guidage (44) correspondante des verrous d'accrochage (35, 36) lors de leur engagement ou de leur extraction, la surface de guidage (16) du prolongement (15) du côté du couvercle et la surface de guidage (44) des verrous de blocage (35, 36) relativement détendus faisant un angle aigu par rapport à la direction d'engagement en s'écartant de la branche latérale (19, 20) de la poignée (6).

7. Coupe-circuit selon la revendication 5 ou 6, caractérisé en ce que les verrous d'accrochage (35, 36) font partie d'un élément de manoeuvre (7) en forme de U, monté pivotant dans les branches latérales (19, 20) de la poignée (6), les extrémités libres des branches de l'élément de manoeuvre (7) constituant les verrous d'accrochage (35, 36).

8. Coupe-circuit selon l'une des revendications 5 à 7, caractérisé en ce que les verrous d'accrochage (35, 36) respectifs sont munis d'un prolongement (37, 38) ayant des caractéristiques élastiques, qui s'appuie sur la branche latérale correspondante (19, 20) de la poignée (6).

9. Coupe-circuit selon l'une des revendications 5 à 8, caractérisé en ce que l'élément de manoeuvre (7) est réalisé en forme de plaque correspondant à l'extension en forme de plaque de la pièce formant poignée (6).

10. Coupe-circuit selon l'une des revendications 1 à 9, caractérisé en ce que la poignée (6) et/ou l'élément de manoeuvre (7) sont réalisés en matière plastique.

11. Coupe-circuit selon l'une des revendications 1 à 10, caractérisé en ce que le couvercle (3) du coupe-circuit est monté pivotant entre les joues latérales (4) de la partie inférieure (2), avec les branches latérales (19, 20) de la poignée (6).

12. Coupe-circuit selon l'une des revendications 1 à 11, caractérisé en ce qu'il sert à recevoir trois éléments fusibles et chacun est associé à un couvercle (3) qui comporte une poignée (6).
